# EUROPEAN PATENT APPLICATION

(11) **EP 1 053 816 A2**
(43) Date of publication of application: **22.11.2000**
(21) Application number: 00110101.3
(22) Date of filing: 09.05.2000
(51) Int. Cl.: B23G 1/16

(54) **Pneumatic device for driving tools**

(30) Priority: 10.05.1999 IT BO990237
(71) Applicant: Bentivogli, Nerio, 40122 Bologna (IT)
(72) Inventor: Bentivogli, Nerio, 40122 Bologna (IT)
(74) Representative: Dall'Olio, Giancarlo

(57) **Abstract**

A device for driving tools (2) includes a pneumatic motor means (5) slidingly mounted inside a body (6) for driving into rotation a screw means (4) made integral therewith. The tool (2) to be driven is axially fixed to the screw means (4). The screw means (4) is slidingly contained inside a seat (8) made in the body (6), according to the same axis of the tool (2). In the body (6) there are made a first slide valve (11) set in connection with air-in-pressure supply means (18), and a second slide valve (12) set in connection with said first slide valve (11) and connected alternately with inlet channels (33,34) of the motor means (5) for operation of the same motor means (5) according to opposite direction, for carrying out the advancement stroke and the return stroke respectively of the tool (2). The slide valves (11,12) have respective pistons (21,22), which are pulse operated for stopping the motor means (5) in non-operation position, and for reverse rotation of the motor means (5) to carry out the said return stroke.

## Description

The present invention relates to devices for mechanical processing using screw tapping tools and the like.

In particular, the invention concerns a pneumatic device for driving screw tapping tools.

It is known that threaded holes are obtained by tapping tools driven into rotation and moved axially according to a suitable step.

Performing the tool working cycle automatically is one of the problems encountered in this field.

The tool working cycle includes an operative tapping stroke, a return stroke and stop phase in a non-operation position.

The working cycle is performed by pneumatic means, which include motor means, valves, sensors and connecting elements which are quite bulky.

In particular, in case of sheet processing machine, it is needed that the operation be performed by a small device which can be installed instead of other tools, such as punches and the like and which can cope with possible emergencies, e.g. in case of advancement hindrance of the tool or accidental lack of pressure.

The object of the present invention is to solve the above mentioned problem by proposing a device which allows to perform automatically a complete operating cycle of tapping tools and similar, and which is controlled wholly pneumatically.

Another object of the present invention is to propose a pneumatic device for driving tools which can cope with possible emergencies, e.g. tool advancement hindrance or accidental lack of pressure.

A further object of the present invention is to propose a simple driving device, which is reliable and versatile.

The above mentioned objects are obtained in accordance with the content of the claims.

The characteristic features of the invention will be pointed out in the following description of a preferred, but not unique embodiment, with reference to the enclosed drawings, in which:
- Figure 1 is a longitudinal sectional view of the proposed device;
- Figure 2 is a fragmentary sectional view of the proposed device, taken along line II-II in Figure 1;
- Figure 3 is a cross sectional view of the proposed device, taken along the line III-III in Figure 1;
- Figures 4, 5 and 6, 7 are fragmentary detailed sectional views of the proposed device in different working conditions, taken along the lines IV-IV and VI-VI in Figure 3, respectively;
- Figures 8, 9, 10 and 11 are fragmentary sectional views of the proposed device in different working conditions, taken along the lines II-II in Figure 1.

With reference to the above described figures, the reference numeral 1 indicates a pneumatic device for driving tapping tools 2.

The tool 2 is axially fixed to a screw 4 by a fixing element 3.

The screw 4 is made integral, in coaxial relation, with a pneumatic motor 5 housed inside a device body 6.

The screw 4 thread pitch is advantageously identical with the tapping tool 2 thread pitch.

The screw 4 is set in engagement with a nut screw 7 which is mounted slidably inside a seat 8 defined by the body 6.

In normal working conditions, the nut screw 7 abuts elastically against a flange 9, which is situated outside the body 6, by action of a helical compression spring 10 in abutment on the bottom of the seat 8.

The body 6 of the device features cylindrical seats 13, 14 for a first slide valve 11 and for a second slide valve 12, which are aimed at controlling the delivery and discharge of the compressed air during the tool 2 operation steps. The slide valves 11,12 lead to the sliding internal surface of the motor 5 and can be connected respectively with inlet channels 33,34 of the motor 5, as will be described in the following.

The axes of the cylindrical seats 13 and 14 are parallel to each other and perpendicular to the axis of the tool 2 driving motor group.

The first slide valve 11 communicates with a channel 18 feeding the compressed air, while the second slide valve 12 communicates with a pair of ducts 15, 16, which open into the seat 8 of the nut screw 7 at different height points.

More precisely, the first duct 15 communicates constantly with the air-in-pressure source and opens into a ring-like groove 17 made in the outer surface of the nut screw 7, while the second duct 16 is usually closed by the nut screw 7.

The cylindrical seats 13, 14 of the slide valves 11, 12 are set in communication by a transversal channel 19, situated in the central parts thereof.

Pistons 21, 22, moving between relative stationary heads 23, 24 and 25, 26, are mounted sliding inside the cylindrical seats 13, 14.

The pistons 21, 22 are elastically stressed along their axes by respective helical compression springs 27, 28 acting in opposite directions against the related heads 23, 26, later on called rear heads for clarity.

The body 6 features also, made therein, a pair of substantially radial ducts 31, 32 which are aimed at setting in pressure, or in alternative, connecting with the discharge outlets, the respective inlet channels 33, 34 of the motor 5.

The radial ducts 31, 32 are connected to the inlet channels 33, 34 by respective holes 33a, 34a made in the outer surface of the motor 5.

A pair of corresponding discharge channels 35, 36 are arranged beside the radial ducts 31, 32.

The discharge channels 35, 36 and the radial ducts 31, 32 communicate with the cylindrical seat 14 of the second slide valve 12.

The radial duct 31 communicates also with the above mentioned duct 15, which opens into the groove 17 of the nut screw 7.

Further channels 37, 38 open in the region of the fore heads 24, 25 of the slide valves 11, 12.

The channels 37, 38 are aimed, as will be explained better later on, at supplying pressure pulses which control the device return and stop phase.

The cylindrical seats 13, 14 of the slide valves 11, 12 communicate with each other in a position adjacent to the fore heads 24, 25, by corresponding branches 29, 39 of a duct 30 which intersects the feeding channel 18.

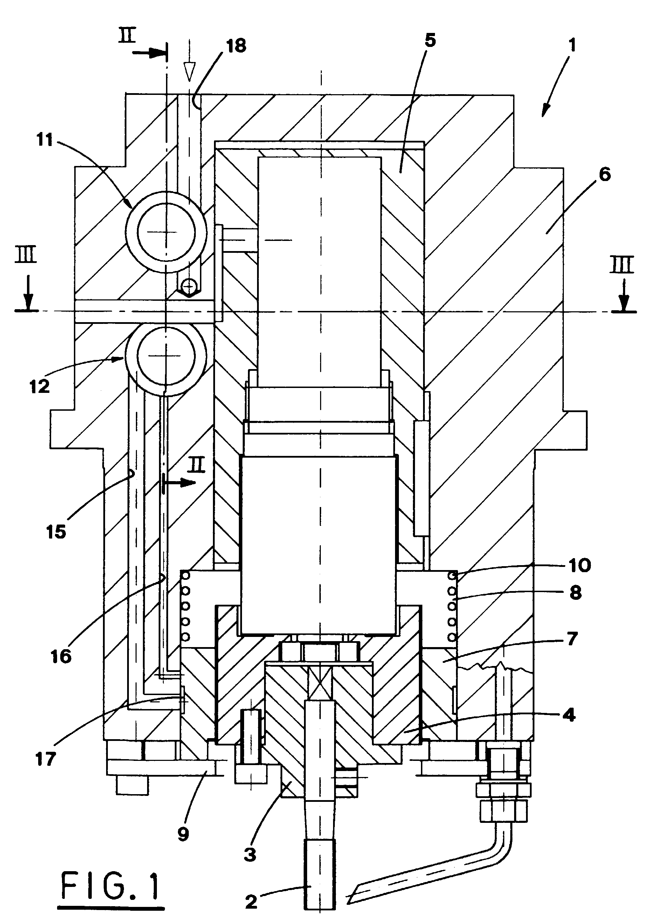

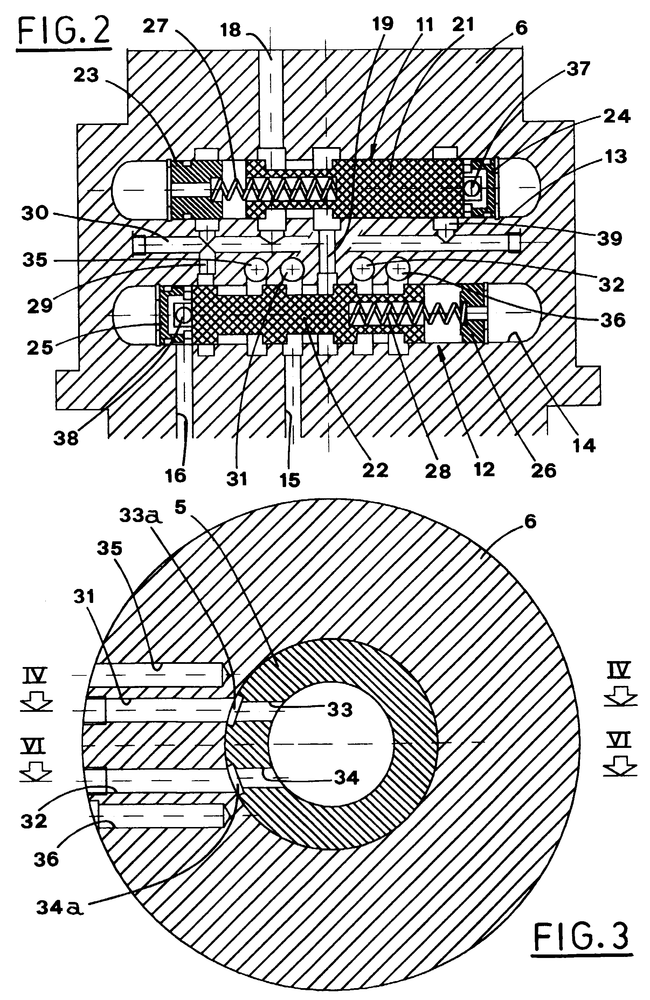

The operation of the pneumatic device will be described in the following starting from the rest position at the beginning of the cycle, illustrated in Figures 1 and 2.

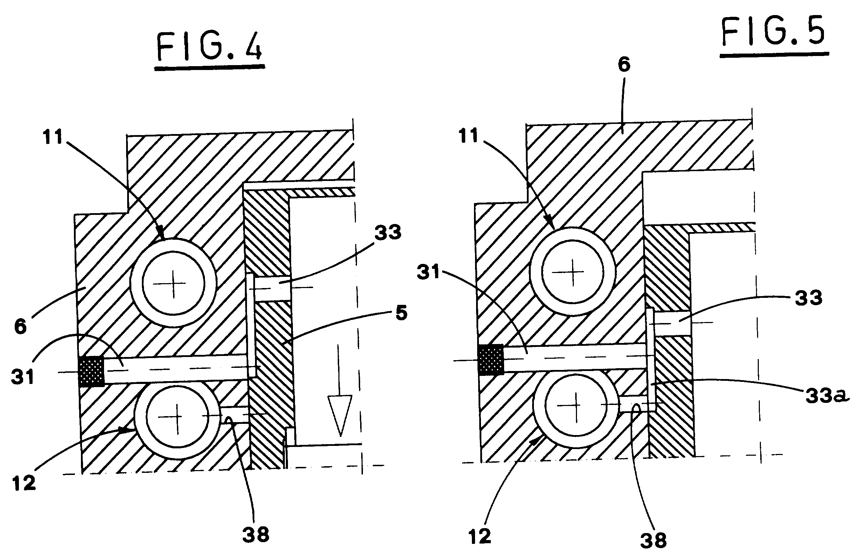

In this situation, when the compressed air is supplied by the feeding channel 18, the radial ducts 31, 32 are set under pressure by the slide valves 11, 12 and consequently, the motor 5 is driven into clockwise rotation, so as to advance the tool 2, together with the whole motor group (see also Figure 4).

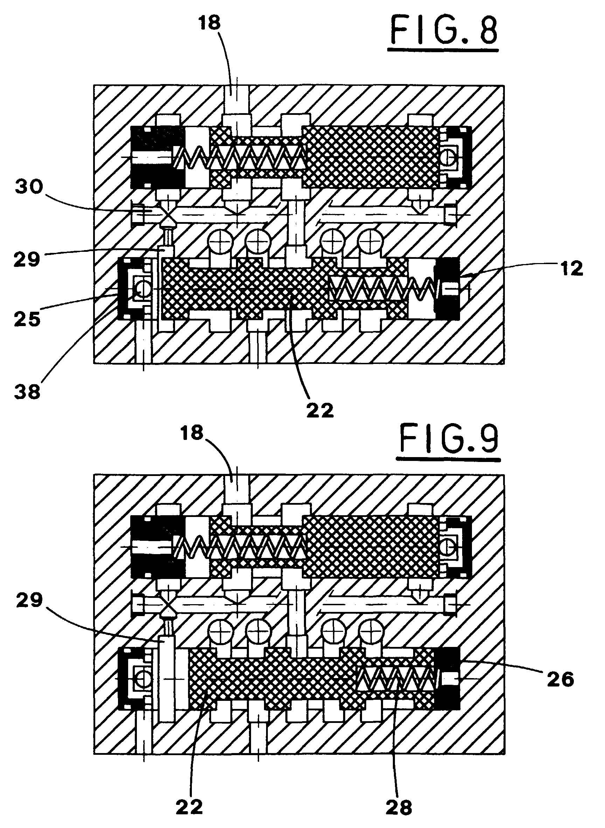

When the motor group has moved until the hole 33a is connected with the channel 38, the air in pressure is introduced into the channel 38 and thus into the second slide valve 12, so that a pulse determining the initial movement of the piston 22 is produced (Figure 8).

The piston 22 movement is completed by the air in pressure supplied by the opening of the aperture of the channel 30 branch 29 (Figure 9).

This way, the air in pressure is sent through the communicating channels 32, 34 and drives the motor 5 into counter-clockwise rotation, and then the action of the screw - nut screw makes the tool 2 return.

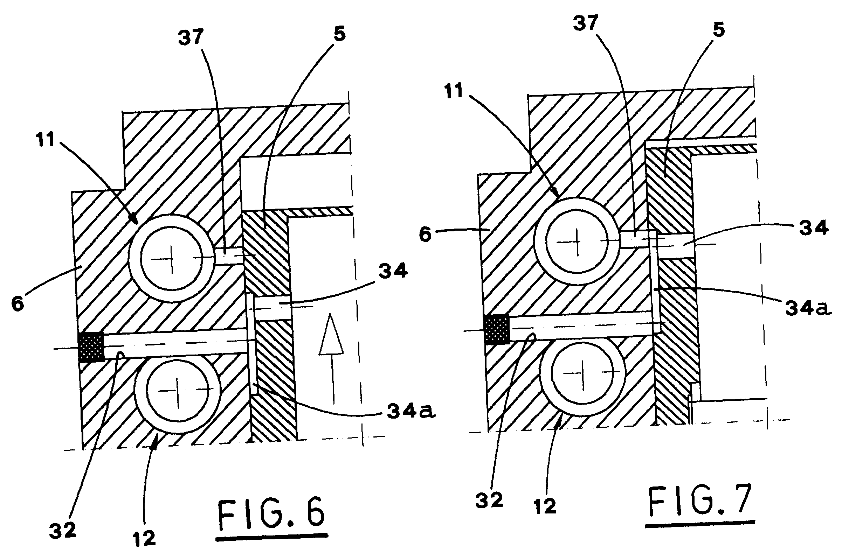

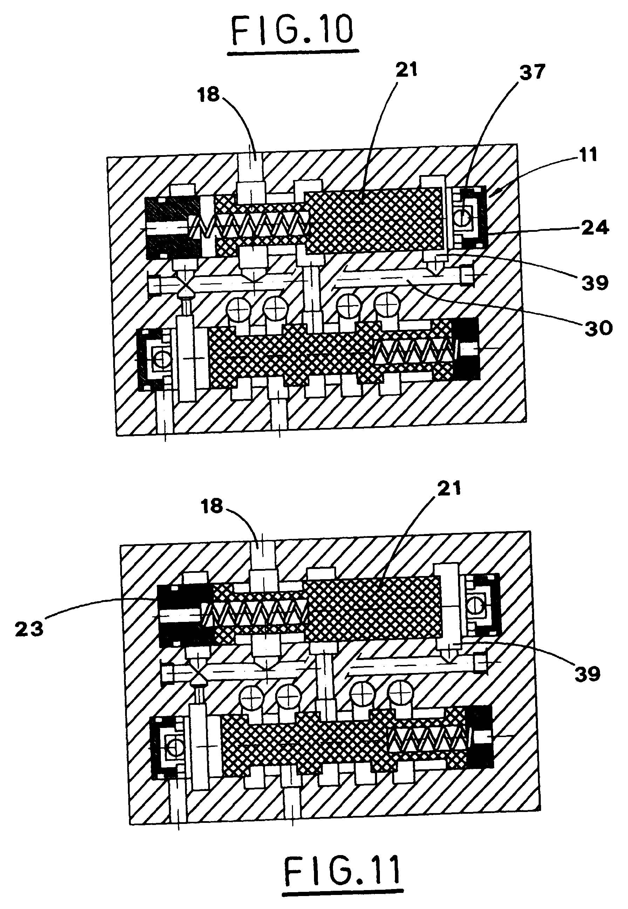

When the hole 34a of the motor inlet channel 34 reaches the channel 37 of the first slide valve 11 (Figure 7), a pulse determining the initial movement of the piston 21 is produced (Figure 10).

The piston 21 movement is completed by the air in pressure supplied by the opening of the aperture of the channel 30 branch 39 (Figure 11).

Consequently, the air introduction into the channel 19 is interrupted and the motor group stops.

The motor 5 remains in stop condition until the pressure from outside is maintained.

When the pressure ceases, the pistons 21, 22 of the slide valves 11, 12 return to the rest position due to the pushing action of the springs 27, 28, so as to be prepared to a new working cycle.

The described device obtains the object of performing automatically a complete operating cycle of tapping tools and similar, by wholly pneumatic control.

Actually, during the compressed air feeding, the whole cycle of the tool moving, return and stopping is automatically performed.

A new working cycle begins when the pressure ceases.

Moreover, the device can intervene automatically in case of working anomalies or emergencies.

In particular, if the tool 2 cannot move, the nut screw 7 moves axially overcoming the elastic reaction of the spring 10.

During the nut screw 7 movement, the duct 15 is set in communication with the duct 16 aperture by the groove 17 of the nut screw 7.

The pressure acting through the duct 16 moves the piston 22 of the second slide valve 12 axially, thus causing the inversion of the motor group stroke in the already described way.

If accidentally the pressure is missing during the feeding step, the cycle interrupts and, when the pressure is restored, the cycle starts again automatically from the point in which it was interrupted.

It is also to be pointed out that it is possible to restore the cycle initial condition from any position of the motor group by manually introducing pressure through the discharge channel 36 by a nozzle applied from outside.

It is understood that what above has been described as a mere, not limitative example, therefore, possible modifications of some details, as well as changes of forms and dimensions of described components, remain within the protective scope of the present invention as claimed hereinafter.

## Claims

1. Pneumatic device for driving tools, characterized in that it includes:
a pneumatic motor (5) fastened slidably in a body (6) and aimed at driving to rotate a screw means (4) integral therewith, with the tool (2) to be operated axially fastened to said screw (4);
a nut screw (7) coupled with said screw means (4) and mounted slidably in a seat (8) made in said body (6) along the axis of said tool (2), with elastic means (10) acting on said nut screw (7) when in a normal operation position; one first slide valve (11) set in connection with air-in-pressure supply means (18), and one second slide valve (12) connected with the said first slide valve (11) and connected alternately with inlet channels (33,34) of said motor (5) for operating the same motor (5) in accordance with opposite directions, for carrying out an advancement stroke and a return stroke respectively for said tool (2), said slide valves (11,12) having respective axially movable pistons (21,22) against elastic means (27,28) and operated by pulses through of respective channels (37,38) for making said motor (5) stop in non-operation position, and for making the motor (5) rotate in the opposite direction thus causing the return stroke, respectively.

2. Device, according to claim 1, characterised in that said pistons (21,22) of said slide valves (11,12) moves along respective cylindrical seats (13,14) between respective rear stationary heads (23,26), on which said elastic means (27,28) act by compression, and fore stationary heads (24,25) to which said channels (37,38) lead for pulse operation of said pistons (21,22), respectively.

3. Device, according to claim 1, characterised in that said channels (37,38) for pulse operation of said pistons (21,22) of the slide valves (11,12), lead to the sliding internal surface of said motor (5) and are connected respectively with said inlet channels (33,34) of said motor (5).

4. Device, according to claim 3 characterised in that said channels (37,38) for pulse operation of said pistons (21,22) of the slide valves (11,12), are connected respectively with said inlet channels (33,34) of said motor (5) via respective holes (33a,34a) made in the outer surface of the motor (5) body.

5. Device, according to claim 1, characterised in that said second slide valve (12) is connected with a first duct (15) which is always connected to air-in-pressure supply and leads to the said seat (8) of said nut screw (7), and with a second duct (16), that leads to the said channel (38) for pulse operation of said piston (22) of the same slide valve (12), the said second duct (16) being usually closed by said screw nut (7), with the said ducts (15,16) set in connection with each other by axial displacement of the same screw nut (7) when advancement of the tool (2) is prevented.

6. Device, according to claim 5, characterised in that said first duct (15) is in connection with a groove (17) made in the outer surface of said screw nut (7) so that it is connected with the said second duct (16) when the screw nut (7) is moved axially, so as to supply said channel (38) with air in pressure.

7. Device, according to claim 1, characterised in that said screw means (4) has a thread pitch equal to the one of the said tool (2), which includes a topping tool.

8. Device, according to claim 1, characterised in that a pair of substantially radial ducts (31,32) are made in the said body (6) and are set in connection with the cylindrical seat (14) of the said second slide valve (12) for setting in pressure the said motor (5) inlet channels (33, 34) respectively, with the connection between the same inlet channels (33, 34) being obtained via respective holes (33a,34a) made in the outer surface of the motor (5) body.
